# EUROPÄISCHE PATENTSCHRIFT

(11) **EP 2 855 985 B1**
(45) Veröffentlichungstag und Bekanntmachung des Hinweises auf die Patenterteilung: **28.11.2018**
(21) Anmeldenummer: 13724278.0
(22) Anmeldetag: 23.05.2013
(51) Int. Cl.: F16K 3/14

(54) **ABSPERRSCHIEBER**
GATE VALVE
VANNE D'ARRÊT

(30) Priorität: 30.05.2012 DE 102012209031
(43) Veröffentlichungstag der Anmeldung: 08.04.2015
(73) Patentinhaber: KSB SE & Co. KGaA, 67227 Frankenthal (DE)
(72) Erfinder: KUBOTH, Hartmut, 91257 Pegnitz (DE); KLIMPKE, Reinhard, 90542 Eckental (DE)
(86) Internationale Anmeldenummer: PCT/EP2013/060569
(87) Internationale Veröffentlichungsnummer: WO 2013/178519

(56) Entgegenhaltungen:
- WO-A1-92/21901
- DE-A1- 3 206 190
- DE-A1- 19 949 513
- DE-B- 1 230 279
- US-A- 2 571 826

## Beschreibung

Die Erfindung betrifft einen Absperrschieber mit einem Gehäuse, zwei in dem Gehäuse angeordneten Sitzringen und zwei zwischen den Sitzringen angeordneten Schieberplatten, die über eine Betätigungseinrichtung in Anlage mit den beiden Sitzringen bringbar sind, wobei die Schieberplatten eine Keilform bildend an einem Plattenhalter angeordnet sind, jede Schieberplatte an der der jeweils anderen Schieberplatte zugewandten Seite eine Vertiefung aufweist, in der jeweils ein Druckstück angeordnet ist, wobei jedes Druckstück an der dem jeweils anderen Druckstück zugewandten Seite eine Ausnehmung aufweist, die beiden Ausnehmungen zusammen einen Raum bilden.

Derartige Absperrschieber sind aus der DE 199 49 513 A1 bekannt und finden in vielen Bereichen ihre Anwendung.

Aus der DE 1 230 279 B ist ein Absperrschieber mit keilförmig angeordneten und kippbar miteinander verbundenen Schieberplatten bekannt, bei dem sich die mit Sitzen im Gehäuse zusammenwirkenden Schieberplatten am Schieber über mehrere über den Umfang der Schieberplatten verteilte Federn abstützen, die mittels sich durch die Federn erstreckenden Sechskantschrauben derart vorgespannt sind, dass sich die Schieberplatten erst kurz vor Erreichen ihrer Endstellung gegen die Sitze anlegen. Über die Sechskantschrauben werden eine bestimmte Kraft und ein bestimmter Weg vorgegeben.

Dies führt jedoch dazu, dass sich die Schieberplatten nach dem Abheben von den Sitzringen verstellen können und in der Folge klappern. Die unerwünschte Verstellung der Schieberplatten kann beim erneuten Schließen des Schiebers auch dazu führen, dass die Dichtflächen der Sitzringe oder die Dichtflächen der Schieberplatten beschädigt werden. Zudem ist das Anordnen vieler Federn über den Umfang der Schieberplatten sehr aufwendig und teuer. Durch die vielen Federn entspricht toleranzbedingt die Ausrichtung der Schieberplatten nicht der Idealeinstellung.
Die Aufgabe der Erfindung besteht darin, einen kostengünstigen und zuverlässig arbeitenden Absperrschieber zu schaffen, der in der Lage ist, sowohl hohe als auch niedrige Differenzdrücke abzudichten, ohne den Absperrschieber in eine Position zu fahren, in der die Schieberplatten verkeilt werden.

Die Aufgabe wird erfindungsgemäß dadurch gelöst, dass in diesem Raum ein mehrere Tellerfedern mit jeweils einer ersten Federkraft und einem ersten Federweg und mehrere Tellerfedern mit jeweils einer zweiten Federkraft und einem zweiten Federweg umfassendes Tellerfederpaket untergebracht ist und die erste Federkraft größer als die zweite Federkraft und der erste Federweg kleiner als der zweite Federweg ist.
Durch die Kombination von zwei Tellerfederraten, eine für große Kräfte und kurze Wege und die andere für kleine Kräfte und große Wege, ist es zusätzlich möglich, am Übergabepunkt, bei dem die Führung der Schieberplatten von den Sitzringen auf den Plattenhalter und Führungseinrichtungen, beispielsweise seitliche Leisten oder eine Nut im Gehäuse, übergeht, eine große Federkraft zum Abdichten der Schieberplatten bei geringen Differenzdrücken zwischen Fluidzulaufseite und Fluidablaufseite zu erreichen. Die große Kraft tritt nur im allerletzten Moment des Schließvorganges auf. Vorher wirkt durch die Tellerfedern nur ein verhältnismäßig großer Weg mit einer verhältnismäßig kleinen Kraft. Die kleine Kraft bedeutet auch eine viel geringere Reibung an den Sitzringen und den Schieberplatten. Außerdem ermöglicht die kleine Kraft ein manuelles Verriegeln der Schieberplatten im Plattenhalter.

In weiterer Ausgestaltung weisen die Druckstücke jeweils eine im Wesentlichen kugelabschnittartige Form mit einer gekrümmten Fläche und einer der gekrümmten Fläche gegenüberliegenden ebenen Fläche auf.

Erfindungsgemäß weist die in jeder der Schieberplatten ausgebildete Vertiefung eine zu der kugelabschnittartigen Form des jeweiligen Druckstücks komplementär ausgebildete Form auf.

Durch die im Wesentlichen kugelabschnittartige Form der Druckstücke und der dazu komplementär ausgebildeten Form der Vertiefung, in die das jeweilige Druckstück eingesetzt ist, sitzen die Druckstücke stets optimal zueinander ausgerichtet in den Vertiefungen der Schieberplatten.

Dadurch, dass sich vom Grund der an der ebenen Fläche eines der Druckstücke vorgesehenen Ausnehmung eine Bohrung zur gekrümmten Fläche des Druckstücks und sich vom Grund der an der ebenen Fläche des anderen Druckstücks vorgesehenen Ausnehmung ein Stift in die Bohrung des erstgenannten Druckstücks erstreckt, wird eine optimale Kraftübertragung des Tellerfederpakets auf die Druckstücke ermöglicht.

Für ein betriebssicheres Verhalten des Keilplattenschiebers sind die Abmessungen der Tellerfedern mit der geringeren Federkraft und dem größeren Federweg derart ausgebildet, dass sie ohne Setzverhalten bis auf Block drückbar sind.

Idealerweise sind die Federkräfte der Tellerfedern mit der großen Federkraft derart bemessen, dass diese nur in der vollständig oder nahezu vollständig geschlossenen Stellung des Absperrschiebers auf die Stirnseiten der Sitzringe wirken, was zu einer viel geringeren Reibung an den Sitzringen und den Schieberplatten führt.

In vorteilhafterweise sind die Federkräfte der Tellerfedern derart ausgebildet, dass die erforderliche Flächenpressung auf den Sitz, bei geringen Differenzdrücken durch die Tellerfederkräfte aufgebracht werden, wodurch eine zuverlässiges Absperren des Absperrschiebers gewährleistet wird.

Ein Ausführungsbeispiel der Erfindung ist in der Zeichnung dargestellt und wird im Folgenden näher beschrieben. Es zeigt die
- Fig. 1: einen erfindungsgemäßen Absperrschieber, die
- Fig. 2: einen Teil des Absperrschiebers gemäß Fig. 1 mit einem Ausbruch im Gehäu-se und einer den Durchfluss verhindernden Stellung der Schieberplatten, die
- Fig. 3: eine Detailansicht des Absperrschiebers gemäß Fig. 2 und die
- Fig. 4: eine Detailansicht des Absperrschiebers mit einer den Durchfluss ermöglichen-den Stellung der Schieberplatten.

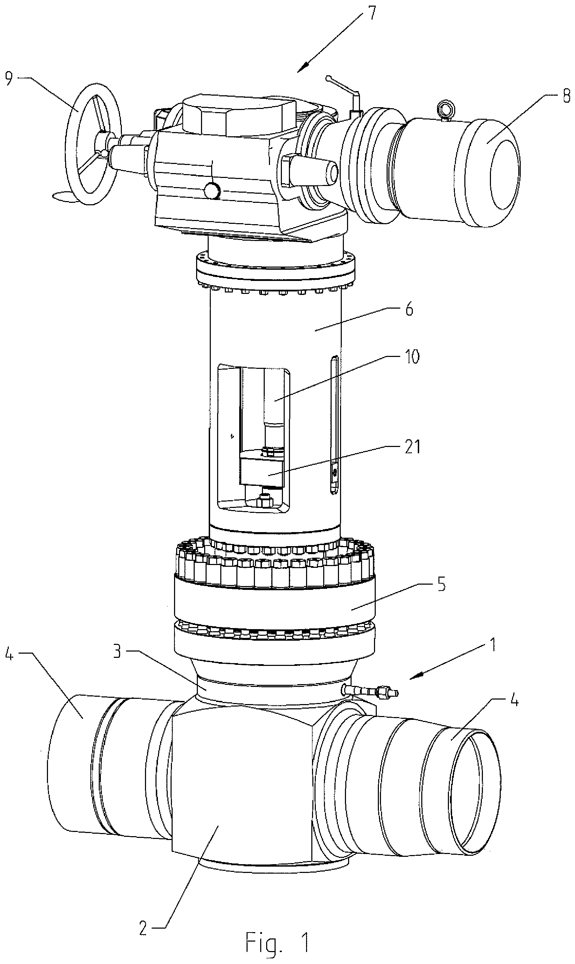

In der Fig. 1 ist ein Absperrschieber für ein fluidführendes System dargestellt, der ein Gehäuse 1 mit einem im Wesentlichen kantigen Gehäuseabschnitt 2 und einem im Wesentlichen zylindrischen Gehäuseabschnitt 3 aufweist, wobei Gehäuseabschnitt 2 und Gehäuseabschnitt 3 einstückig miteinander verbunden sind. An dem Gehäuseabschnitt 2 sind zwei Rohrstutzen 4 zum Anschließen an nicht dargestellte Rohr- oder Leitungselemente ausgebildet. In der Darstellung erstreckt sich der Gehäuseabschnitt 3 in einem Winkel von im Wesentlichen 90° von dem Gehäuseabschnitt 2 nach oben weg. Das Gehäuse 1 ist am freien Ende des Gehäuseabschnitts 3 mit einem Deckel 5 verschlossen. An dem Deckel 5 ist ein sich weiter nach oben erstreckender Bügel 6 befestigt, an dem wiederum eine Stellvorrichtung 7 angebracht ist.

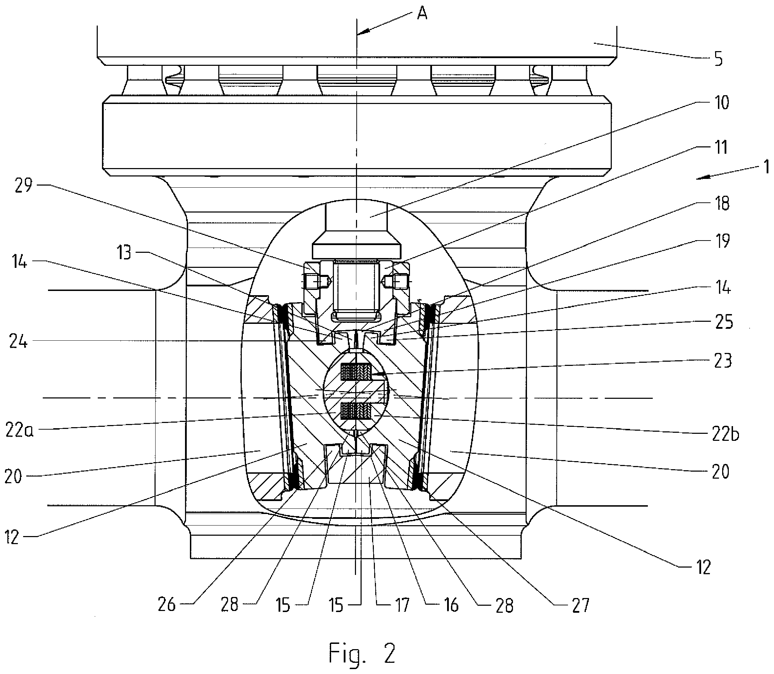

Die sowohl mittels eines Elektromotors 8 als auch eines Handrads 9 betätigbare Stellvorrichtung 7 treibt eine Spindel 10, deren in das Innere des Gehäuses 1 geführtes Ende in Fig. 2 gezeigt wird, um die Drehachse A drehbar an. Das sich innerhalb des Gehäuses 1 befindende Ende der Spindel 10 ist mit einem Plattenhalter 11 verschraubt. Der Plattenhalter 11 weist einen im Wesentlichen ringartigen Aufbau auf, wobei der in der Zeichnung dargestellte obere mit der Spindel 10 verbundene Bereich des Plattenhalters 11 breiter ausgebildet ist als der untere von der Spindel 10 abgewandte Bereich, sodass die zwei Stirnflächen des Plattenhalters 11 schräg zueinander und zur Drehachse A verlaufen. Zwei Schieberplatten 12 sind eine Keilform bildend an dem Plattenhalter 11 angeordnet. Bei der vorliegenden Ausführungsform werden die Schieberplatten 12, in eine sich von einer Stirnseite zur anderen Stirnseite erstreckende Ausnehmung 13 in den Plattenhalter 11 eingesetzt und ähnlich einem Bajonettverschluss, um einen bestimmten Winkel, hier vorzugsweise um 90°, verdreht, sodass an den Schieberplatten 12 ausgebildete Vorsprünge 14 und 15 in eine Aussparung 16 in einer unteren Begrenzungswand 17 bzw. in eine Aussparung 18 in einer oberen Begrenzungswand 19 der Ausnehmung 13 bewegt werden. Bei Betätigung des Stellantriebs 7 zieht die Spindel 10 die Schieberplatten 12 nach oben in die Offenstellung, bzw. bewegt die Schieberplatten 12 in Anlage an die freien Stirnseiten von im Gehäuseabschnitt 2 angeordneten Sitzringen 20 und somit in die Geschlossenstellung. Durch Justierung eines im Bügel 6 vorgesehenen und in Fig. 1 gezeigten Arretierklobens 21 wird ein Verkeilen des Schiebers verhindert. Der Arretierkloben 21 dient als Anschlagmittel zum Begrenzen der Spindelbewegung in das Gehäuse 1. Bei der gezeigten Ausführungsform des Absperrschiebers sind die Sitzringe 20 an dem im Gehäuseabschnitt 2 endenden, jedoch nicht gezeigten Bereich der Rohrstutzen 4 angeschweißt.

Die beiden in dem Plattenhalter 11 beweglich eingebauten Schieberplatten 12 stützen sich an zwei auswechselbaren Druckstücken 22a, 22b ab. Mittels eines Tellerfederpakets 23 werden die beiden Druckstücke 22a, 22b voneinander weggedrückt, wodurch die Schieberplatten 12, in der in Fig. 2 dargestellten geschlossenen Position des Keilplattenschiebers, gegen die den Schieberplatten 12 zugewandten Stirnseiten der Sitzringe 20 gedrückt werden. In der offenen Position werden die Vorsprünge 14 und 15 gegen von den Aussparungen 16 und 18 gebildete Wandungen 24, 25, 26 und 27 gedrückt. Dadurch wird ein Klappern der Schieberplatten 12 verhindert, wenn diese nicht mehr in Berührung mit den Sitzringen 20 sind. Die Druckstücke 22a, 22b weisen eine im Wesentlichen kugelabschnittartige Form auf und sind in komplementär ausgebildeten wannenartigen Vertiefungen 28 in den Schieberplatten 12, insbesondere an den sich zugewandten Seiten der Schieberplatten 12, angeordnet.

Die Schieberplatten 12 werden im Plattenhalter 11 durch einen Plattenhaltering 29 gegen Verdrehen gesichert. Um ein Verdrehen der Absperrteile zu vermeiden, ist der Plattenhalter 11 vorzugsweise durch hier nicht gezeigte Führungseinrichtungen, beispielsweise durch seitliche Leisten oder wenigstens eine Nut im Gehäuse 1, geführt.

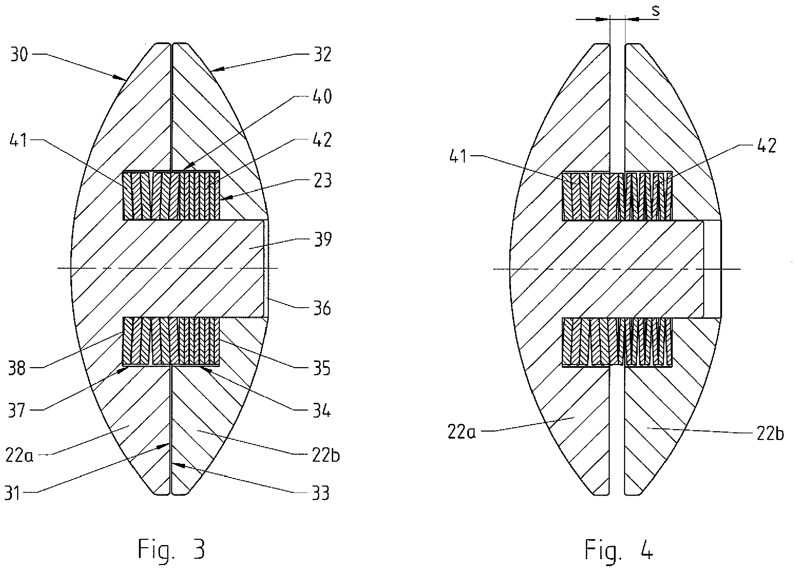

Die Fig. 3 zeigt detailliert die Druckstücke 22a, 22b sowie das Tellerfederpaket 23 mit deren Hilfe die Schieberplatten 12 aus Fig. 2 gegen die Sitzringe 20 gedrückt werden. Die Anordnung der Druckstücke 22a, 22b entspricht der in der Fig. 2 dargestellten, den Durchfluss eines Fluids durch den Schieber hindurch verhindernden Stellung der Schieberplatten 12.

Die Druckstücke 22a, 22b weisen eine im Wesentlichen kugelabschnittartige Form mit einer gekrümmten Fläche 30 und einer der gekrümmten Fläche 30 gegenüberliegenden ebenen Fläche 31 bei Druckstück 22a und eine gekrümmte Fläche 32 und einer der gekrümmten Fläche 32 gegenüberliegenden ebenen Fläche 33 bei Druckstück 22b auf. Wie aus der Fig. 3 ersichtlich, kommen die Druckstücke 22a, 22b auch bei geschlossenem Absperrschieber nicht in Blocklage, d.h., die ebenen Flächen 31 und 33 der Druckstücke 22a, 22b berühren sich nicht. Wodurch eine Verkeilung der Schieberplatten 12 verhindert wird, da die Schieberplatten 12 immer elastisch zueinander angeordnet sind. An der ebenen Fläche 33 des Druckstücks 22b ist eine Ausnehmung 34 vorgesehen, von deren Grund 35 sich eine Bohrung 36 mit verringertem Durchmesser zur gekrümmten Fläche 32 erstreckt. An der ebenen Fläche 31 des Druckstücks 22a ist eine Ausnehmung 37 vorgesehen, von deren Grund 38 sich ein Stift 39 in die Bohrung 36 des Druckstücks 22b erstreckt. Der Stift 39 und die sich gegenüberliegenden Ausnehmungen 34 bzw. 37 bilden einen Raum 40, insbesondere einen Ringraum, in dem das Tellerfederpaket 23 untergebracht ist. Der Stift 39 dient sowohl zur Stützung des Tellerfederpaketes 23 als auch zur Führung der gegeneinander verschiebbaren Druckstücke 22a, 22b. Das Tellerfederpaket 23 umfasst mehrere Tellerfedern 41 mit jeweils einer ersten Federkraft und einem ersten Federweg und mehrere Tellerfedern 42 mit jeweils einer zweiten Federkraft und einem zweiten Federweg, wobei die erste Federkraft größer als die zweite Federkraft und der erste Federweg kleiner als der zweite Federweg ist. Dadurch ist es möglich, dass die erforderliche Flächenpressung auf den Sitz, d. h. auf die Stirnseiten der Sitzringe 20, bei geringen Differenzdrücken auf den den Rohrstutzen 4 zugewandten Seiten der Schieberplatten 12 durch die Kraft der Tellerfedern aufgebracht wird. Die Abmessungen der Tellerfedern 42 mit der geringeren Federkraft und dem größeren Federweg sind zudem derart ausgebildet, dass sie ohne Setzverhalten bis auf Block drückbar sind.

Die Fig. 4 zeigt die Druckstücke 22a, 22b in der Weise, wie dies bei von den Sitzringen 20 abgehobenen Schieberplatten 12 vorzufinden ist. Beim Vergleichen der Fig. 4 mit Fig. 3 zeigt sich, dass die zurückgelegte Strecke s überwiegend von den Tellerfedern 42 und nur zu einem geringen Teil von den Tellerfedern 41 bewerkstelligt wurde. Die Federkraft der Tellerfedern 41 wirkt also nur in der vollständig oder nahezu vollständig geschlossen Stellung des Absperrschiebers auf die Stirnseiten der Sitzringe 20.

**Bezugszeichenliste**

| | | | |
|---|---|---|---|
| 1 | Gehäuse | 28 | Vertiefung |
| 2 | Gehäuseabschnitt | 29 | Plattenhaltering |
| 3 | Gehäuseabschnitt | 30 | gekrümmte Fläche |
| 4 | Rohrstutzen | 31 | ebene Fläche |
| 5 | Deckel | 32 | gekrümmte Fläche |
| 6 | Bügel | 33 | ebene Fläche |
| 7 | Stellvorrichtung | 34 | Ausnehmung |
| 8 | Elektromotor | 35 | Grund |
| 9 | Handrad | 36 | Bohrung |
| 10 | Spindel | 37 | Ausnehmung |
| 11 | Plattenhalter | 38 | Grund |
| 12 | Schieberplatte | 39 | Stift |
| 13 | Ausnehmung | 40 | Raum |
| 14 | Vorsprung | 41 | Tellerfeder |
| 15 | Vorsprung | 42 | Tellerfeder |
| 16 | Aussparung | | |
| 17 | Begrenzungswand | A | Drehachse |
| 18 | Aussparung | s | Strecke |
| 19 | Begrenzungswand | | |
| 20 | Sitzring | | |
| 21 | Arretierkloben | | |
| 22a | Druckstück | | |
| 22b | Druckstück | | |
| 23 | Tellerfederpaket | | |
| 24 | Wandung | | |
| 25 | Wandung | | |
| 26 | Wandung | | |
| 27 | Wandung | | |

## Patentansprüche

1. Absperrschieber mit einem Gehäuse, zwei in dem Gehäuse angeordneten Sitzringen und zwei zwischen den Sitzringen angeordneten Schieberplatten, die über eine Stellvorrichtung in Anlage mit den beiden Sitzringen bringbar sind, die Schieberplatten (12) eine Keilform bildend an einem Plattenhalter (11) angeordnet sind, jede Schieberplatte (12) an der der jeweils anderen Schieberplatte (12) zugewandten Seite eine Vertiefung (28) aufweist, in der jeweils ein Druckstück (22a, 22b) angeordnet ist, wobei jedes Druckstück (22a, 22b) an der dem jeweils anderen Druckstück zugewandten Seite eine Ausnehmung (34, 37) aufweist, die beiden Ausnehmungen (34, 37) zusammen einen Raum (40) bilden,
**dadurch gekennzeichnet, dass**
in diesem Raum ein mehrere Tellerfedern (41) mit jeweils einer ersten Federkraft und einem ersten Federweg und mehrere Tellerfedern (42) mit jeweils einer zweiten Federkraft und einem zweiten Federweg umfassendes Tellerfederpaket (23) untergebracht ist und die erste Federkraft größer als die zweite Federkraft und der erste Federweg kleiner als der zweite Federweg ist.

2. Absperrschieber nach Anspruch 1, **dadurch gekennzeichnet, dass** die Druckstücke (22a, 22b) jeweils eine im Wesentlichen kugelabschnittartige Form mit einer gekrümmten Fläche (30, 32) und einer der gekrümmten Fläche gegenüberliegenden ebenen Fläche (31, 33) aufweisen.

3. Absperrschieber nach einem der Ansprüche 1 oder 2, **dadurch gekennzeichnet, dass** die in jeder der Schieberplatten (12) ausgebildete Vertiefung (28) eine zu der kugelabschnittartigen Form des jeweiligen Druckstücks (22a, 22b) komplementär ausgebildete Form aufweist.

4. Absperrschieber nach einem der Ansprüche 1 bis 3, **dadurch gekennzeichnet, dass** sich vom Grund (35) der an der ebenen Fläche (33) eines der Druckstücke (22b) vorgesehenen Ausnehmung (34) eine Bohrung (36) zur gekrümmten Fläche (32) des Druckstücks (22b) erstreckt und dass sich vom Grund (38) der an der ebenen Fläche (31) des anderen Druckstücks (22a) vorgesehenen Ausnehmung (37) ein Stift (39) in die Bohrung (36) des Druckstücks (22b) erstreckt.

## Claims

1. Gate valve with a housing, with two seat rings arranged in the housing and with two valve plates which are arranged between the seat rings and which can be brought into bearing contact with the two seat rings via an actuating device, the valve plates (12) being arranged on a plate holder (11) so as to form a wedge shape, each valve plate (12) has, on the side facing the other valve plate (12) in each case, a depression (28) in which in each case a pressure piece (22a, 22b) is arranged, each pressure piece (22a, 22b) having a recess (34, 37) on the side facing the other pressure piece in each case, the two recesses (34, 37) together forming a space (40), **characterized in that**
this space accommodates a cup spring assembly (23) comprising a plurality of cup springs (41), in each case with a first spring force and with a first spring travel, and a plurality of cup springs (42), in each case with a second spring force and with a second spring travel, and the first spring force being higher than the second spring force and the first spring travel being shorter than the second spring travel.

2. Gate valve according to Claim 1, **characterized in that** the pressure pieces (22a, 22b) have in each case a shape essentially in the form of a segment of a sphere, with a curved face (30, 32) and with a plane face (31, 33) lying opposite the curved face.

3. Gate valve according to either one of Claims 1 and 2, **characterized in that** the depression (28) formed in each of the valve plates (12) has a shape complementary to the shape in the form of a segment of a sphere of the respective pressure piece (22a, 22b).

4. Gate valve according to one of Claims 1 to 3, **characterized in that** a bore (36) extends from the bottom (35) of the recess (34), provided on the plane face (33) of one of the pressure pieces (22b), to the curved face (32) of the pressure piece (22b), and **in that** a pin (39) extends from the bottom (38) of the recess (37), provided on the plane face (31) of the other pressure piece (22a), into the bore (36) of the pressure piece (22b).

## Revendications

1. Vanne d'arrêt comprenant un boîtier, deux bagues formant siège disposées dans le boîtier et deux plaques de vanne disposées entre les bagues formant siège, lesquelles plaques de vanne peuvent être amenées en appui contre les deux bagues formant siège par le biais d'un dispositif de réglage, les plaques de vanne (12) étant disposées sur un support de plaques (11) en formant une forme de coin, chaque plaque de vanne (12) comprenant, sur le côté tourné vers l'autre plaque de vanne (12) respective, un creux (28) dans lequel est disposée respectivement une pièce de pression (22a, 22b), chaque pièce de pression (22a, 22b) comprenant, sur le côté tourné vers l'autre pièce de pression respective, un évidement (34, 37), les deux évidements (34, 37) formant conjointement un espace (40),
**caractérisée en ce**
**qu'**un ensemble de ressorts Belleville (23) comportant plusieurs ressorts Belleville (41) présentant respectivement une première force de ressort et une première course de ressort et plusieurs ressorts Belleville (42) présentant respectivement une deuxième force de ressort et une deuxième course de ressort est logé dans cet espace et la première force de ressort est supérieure à la deuxième force de ressort et la première course de ressort est inférieure à la deuxième course de ressort.

2. Vanne d'arrêt selon la revendication 1, **caractérisée en ce que** les pièces de pression (22a, 22b) présentent respectivement une forme sensiblement de type segment sphérique dotée d'une surface courbe (30, 32) et d'une surface plane (31, 33) en regard de la surface courbe.

3. Vanne d'arrêt selon l'une quelconque des revendications 1 et 2, **caractérisée en ce que** le creux (28) formé dans chacune des plaques de vanne (12) présente une forme réalisée de manière complémentaire à la forme de type segment sphérique de la pièce de pression (22a, 22b) respective.

4. Vanne d'arrêt selon l'une quelconque des revendications 1 à 3, **caractérisée en ce qu'**à partir du fond (35) de l'évidement (34) prévu sur la surface plane (33) de l'une des pièces de pression (22b), un alésage (36) s'étend vers la surface courbe (32) de la pièce de pression (22b) et **en ce qu'**à partir du fond (38) de l'évidement (37) prévu sur la surface plane (31) de l'autre pièce de pression (22a), une goupille (39) s'étend dans l'alésage (36) de la pièce de pression (22b).
